# EUROPÄISCHE PATENTSCHRIFT

(11) **EP 2 065 160 B1**
(45) Veröffentlichungstag und Bekanntmachung des Hinweises auf die Patenterteilung: **17.02.2016**
(21) Anmeldenummer: 08020503.2
(22) Anmeldetag: 26.11.2008
(51) Int. Cl.: B29C 47/68

(54) **Filtrationseinrichtung**
Filtration device
Dispositif de filtration

(30) Priorität: 30.11.2007 DE 102007057816
(43) Veröffentlichungstag der Anmeldung: 03.06.2009
(73) Patentinhaber: Nordson Holdings S.à r.l. & Co. KG, 40699 Erkrath (DE)
(72) Erfinder: Wöstmann, Stefan, 48336 Sassenberg (DE); Kreyenborg, Jan-Udo, 48157 Münster (DE)
(74) Vertreter: Eisenführ Speiser

(56) Entgegenhaltungen:
- EP-A1- 0 875 357
- AT-B- 413 654
- DE-C1- 3 527 173
- DE-C1- 3 941 831

## Beschreibung

Die Erfindung betrifft eine Filtrationseinrichtung nach dem Oberbegriff des Anspruchs 1.

Gattungsgemäße Filtrationseinrichtungen sind aus der Praxis bekannt. Nach einem Siebwechsel wird der Siebbolzen in eine Entlüftungsstellung verfahren. In der Entlüftungsstellung kann flüssiger Kunststoff aus dem Förderkanal in die Siebkammer gelangen und die Luft aus der Siebkammer verdrängen. Wenigstens eine Entlüftungsnut verläuft an der Oberfläche des Siebbolzens und mündet ins Freie, so dass die beim Entlüften verdrängte Luft entweichen kann. Im Anschluss an die Entlüftung gelangt flüssiger Kunststoff in die Nut, durchströmt diese und tritt am Ende der Nut ebenfalls ins Freie aus. Erst wenn der Siebbolzen aus seiner Entlüftungsstellung in die Arbeitsstellung verfahren worden ist, befindet sich die Nut vollständig innerhalb des Gehäuses, so dass ein weiterer Austritt von Kunststoff aus der Nut verhindert ist.

Auch aus der EP 0 875 357 A1, der DE 35 27 173 C1 oder der DE 39 41 831 C1 sind gattungsgemäße Filtrationseinrichtungen bekannt.

Abweichend von dem vorbeschriebenen Stand der Technik schlägt die AT 413 654 B, die die Merkmale des Oberbegriffs des Anspruchs 1 offenbart, vor, die in der Oberfläche des Siebbolzens vorgesehene Nut nicht über die volle axiale Länge auszugestalten, die zur Entlüftung der Siebkammer erforderlich ist. Vielmehr wird die Nut bereits früher vom Gehäuse abgedickt, wenn die Entlüftung noch nicht vollständig durchgeführt ist, der Siebbolzen aber auch noch nicht seine Arbeitsstellung eingenommen hat. Eine Entlüftungsbohrung schließt sich in einem Winkel an die Nut an und verläuft durch den Siebbolzen, und zwar über eine gewisse axiale Länge des Siebbolzens, so dass über diese Entlüftungsbohrung auch dann noch entlüftet werden kann bzw. Schmelze abgeführt werden kann, wenn sich die Nut selbst bereits vollständig innerhalb des Gehäuses befindet und dementsprechend keine ins Freie führende Mündung mehr aufweist. Die ins Freie führende Mündung der Entlüftungsbohrung wird erst später vom Gehäuse verdeckt, wenn der Siebbolzen weiter in Richtung seiner Arbeitsstellung verfahren worden ist, so dass der Entlüftungskanal, der sowohl von der Nut als auch von der Entlüftungsbohrung gebildet wird, verschlossen ist, wenn sich der Siebbolzen in seiner Arbeitsstellung befindet.

Bei beiden vorbekannten Arten von Filtrationseinrichtungen besteht ein erstes Problem darin, dass im Bereich des Siebbolzens austretende Kunststoffschmelze, die beispielsweise Temperaturen über 200° Celsius aufweist, eine Gefahr für das die Filtrationseinrichtung bedienende Personal darstellen kann. Aufwendige Sicherheitseinrichtungen sind daher erforderlich, beispielsweise in Form von Schutzhauben, welche die Filtrationseinrichtung umgeben. Diese Schutzhauben beeinträchtigen die Wirtschaftlichkeit der Filtrationseinrichtung durch ihre Herstellungskosten und durch ihren Raumbedarf. Zudem behindern sie den freien Blick auf die Filtrationseinrichtung, um diese kontrollieren und überprüfen zu können, und sie können das Personal behindern, wenn Wartungsarbeiten an der Filtrationseinrichtung durchgeführt werden sollen.

Der Erfindung liegt die Aufgabe zugrunde, eine gattungsgemäße Filtrationseinrichtung dahingehend zu verbessern, dass diese mit einfachen Mitteln und möglichst wirtschaftlich eine für das Bedienungspersonal möglichst sichere Ausgestaltung der Filtrationseinrichtung ermöglicht.

Diese Aufgabe wird durch eine Filtrationseinrichtung mit den Merkmalen des Anspruchs 1 oder des Anspruchs 2 gelöst.

Die Erfindung schlägt mit anderen Worten gemäß Anspruch 1 als ersten Lösungsweg vor, die Entlüftungsleitung nicht ausschließlich als Nut und / oder Bohrung durch den Siebbolzen verlaufen zu lassen, sondern einen Teil der Entlüftungsleitung durch das Gehäuse verlaufen zu lassen. Dieser Teil der Entlüftungsleitung wird als "gehäuseseitiger Abschnitt" der Entlüftungsleitung bezeichnet. Die Nut, die in der Oberfläche des Siebbolzens vorgesehen ist, schließt also an diesen gehäuseseitigen Abschnitt an. Auf diese Weise kann die Lage der Mündung der Entlüftungsleitung sehr frei gewählt werden, so dass der aus dem Gehäuse austretende Kunststoff porblemlos an einer Stelle austreten kann, wo eine Gefährdung des Personals ausgeschlossen ist.

Aufgrund der Relativbewegung zwischen Siebbolzen und Gehäuse kann auf einfache Weise durch die entsprechende Anordnung des gehäuseseitigen Abschnitts bewirkt werden, dass die Verbindung zwischen der Nut im Siebbolzen und dem gehäuseseitigen Abschnitt der Entlüftungsleitung getrennt ist, wenn sich der Siebbolzen in seiner Arbeitsstellung befindet, so dass in diesem Zustand ein weiterer Austritt von Schmelze aus der Entlüftungsleitung zuverlässig vermieden ist.

Insbesondere wenn sämtliche Abschnitte der Entlüftungsleitung einschließlich deren gehäuseseitigen Abschnitts als Nut ausgestaltet sind, ist die Entlüftungsleitung bei entsprechender Stellung des Siebbolzens auf ganzer Länge offen zugänglich und kann auf einfache Weise gereinigt werden, so dass ein Verstopfen der Entlüftungsleitung und eine dadurch verursachte Funktionsstörung der Filtrationseinrichtung entweder ausgeschlossen ist oder innerhalb kürzester Zeit und mit einfachsten Mitteln behoben werden kann.

Die Erfindung schlägt gemäß Anspruch 2 als zweiten Lösungsweg vor, die Entlüftungsleitung abschnittsweise zu erweitern und / oder zu vertiefen, so dass jedenfalls der Querschnitt der Entlüftungsleitung vergrößert ist. Durch diese Querschnittsvergrößerung wird die Fließgeschwindigkeit reduziert, mit welcher die Kunststoffschmelze durch die Entlüftungsleitung strömt, wobei zusätzlich gegebenenfalls Verwirbelungen in der Schmelze im Bereich der Querschnittsänderung bewirkt werden können, welche die Strömungsgeschwindigkeit weiter herabsetzen. Jedenfalls kann die Austrittsgeschwindigkeit, mit welcher die Schmelze aus dem Gehäuse austritt, so weit herabgesetzt werden, dass sie unkritisch ist. Somit kann auch ohne zusätzliche Maßnahmen wie z. B. eine Abdeckhaube sichergestellt werden, dass die austretende Schmelze nicht spritzt und das Personal demenstsprechend nicht gefährdet.

In der Praxis kann ein Problem darin bestehen, dass die aus der Oberfläche des Siebbolzens austretende Schmelze zu Verschmutzungen am Siebbolzen und an der Gehäuseoberfläche führt, aus welcher der Siebbolzen herausragt. Da die Filtratiönseinrichtung und deren Gehäuse entsprechend dem Temperaturniveau des darin geführten flüssigen Kunststoffs vergleichsweise hohe Oberflächentemperaturen aufweist, können die an der Gehäusewand anhaftenden Kunststoffreste gegebenenfalls verbacken und eine regelmäßige, vergleichsweise aufwendige Reinigung erfordern, um die zuverlässige Funktion der Filtrationseinrichtung sicherzustellen. Insbesondere muss die freie Beweglichkeit des Siebbolzens zwischen seinen einzelnen Arbeits-, Entlüftungs- und Wartungsstellungen sichergestellt sein.

Wenn der gehäuseseitige Abschnitt der Entlüftungsleitung als Entlüftungsbohrung ausgestaltet ist, also anders als ein offener "Kanal" zirkumferent geschlossen und vom Gehäuse umgeben ist, kann dieser Teil der Entlüftungsleitung problemlos so verlaufen, dass die Entlüftungsbohrung in einer Gehäuseoberfläche mündet, in welcher keine beweglichen Bauteile wie z. B. der aus dem Gehäuse herausfahrbare Siebbolzen vorgesehen sind. Bei einem länglichen, quaderförmigen Gehäuse beispielsweise können in den beiden gegenüberliegenden Stirnwänden Öffnungen vorgesehen sein, aus denen der Siebbolzen aus dem Gehäuse herausgefahren werden bzw. in das Gehäuse eingeführt werden kann. Vorteilhaft kann die Entlüftungsbohrung in einer der anderen, also nicht in den Stirnwänden, sondern in einer der viel Mantelflächen des Gehäuses münden, so dass die Beweglichkeit des Siebbolzens keinesfalls durch Schmelzreste beeinträchtigt werden kann, die im Bereich dieser Mündung an der Gehäuseoberfläche verbleiben und dort festbacken.

Wird die Mündung der Entlüftungsbohrung jedoch in eine solche Gehäuseoberfläche verlegt, wo ein bewegliches Bauteil vorgesehen ist, so kann diese Mündung in einem seitlichen Abstand neben einem beweglichen Bauteil vorgesehen sein, und zwar höher, gleich hoch oder niedriger als das bewegliche Bauteil, oder die Mündung kann unterhalb des beweglichen Bauteils vorgesehen sein, so dass jedenfalls Reste von aus der Entlüftungsbohrung ausgetretener Schmelze nicht auf die beweglichen Bauteile tropfen oder fließen können und die Beweglichkeit des Bauteils nicht beeinträchtigen können. Dementsprechend stellen die eventuell am Gehäuse anhaftenden Schmelze-Reste keine funktionale Beeinträchtigung dar, und dementsprechend kann der erforderliche Wartungsaufwand gering gehalten werden, da eine Entfernung dieser Schmelze-Reste nur selten und nicht besonders gründlich erfolgen muss.

Vorteilhaft können zwei oder mehr Nuten in der Oberfläche des Siebbolzens verlaufen. Dadurch, dass sich diese Nuten in axialer Richtung auf dem Siebbolzen unterschiedlich weit erstrecken, ist eine unterschiedlich intensive Entlüftung durch die axiale Stellung des Siebbolzens erzielbar, so dass dieser mehrere unterschiedliche Entlüftungsstellungen einnehmen kann und beispielsweise in einer Entlüftungsstelle nur eine einzige Nut an den gehäuseseitigen Abschnitt der Entlüftungsleitung anschließt, während in einer anderen Entlüftungsstellung zwei oder mehr Nuten gleichzeitig an den gehäuseseitigen Abschnitt anschließen.

Dabei kann insbesondere vorteilhaft vorgesehen sein, dass die unterschiedlichen Nuten zu unterschiedlichen Stellen einer Siebkammer verlaufen, die im Siebbolzen vorgesehen ist und in der das Sieb angeordnet ist. Auf diese Weise kann ein kontrollierter Entlüftungsverlauf innerhalb der Siebkammer ermöglicht werden, indem beispielsweise die Entlüftung an einer Stelle der Siebkammer bereits beendet wird, wenn erfahrungsgemäß ein bestimmter Bereich der Siebkammer, der mit dieser Nut in Verbindung steht, bereits mit Schmelze gefüllt ist während andere, noch ungefüllte Bereiche weiterhin entlüftet werden, da die von diesen Bereichen der Siebkammer verlaufenden Nuten noch mit dem gehäuseseitigen Abschnitt in Verbindung stehen.

Vorteilhaft ist in an sich bekannter Weise eine Vorflut-Nut in der Oberfläche des Siebbolzens vorgesehen, die bereits eine Verbindung zum Förderkanal schafft, bevor die Siebkammer in den Förderkanal ragt. Auf diese Weise ist es möglich, einen sehr geringen Teilstrom der Schmelze abzuzweigen und durch die Vorflut-Nut die Siebkammer zu füllen, so dass durch diesen sehr geringen Anteil von aus dem Förderkanal abgezweigter Schmelze die Qualität des Produktes, welches der Filtrationseinrichtung nachgeschaltet produziert wird, nicht beeinträchtigt wird.

Vorteilhaft kann zu den Entlüftungsnuten und zu der Vorflut-Nut jeweils eine korrespondierende Markierung an der Oberfläche des Siebbolzens vorgesehen sein und zwar an einer Stelle auf dem Siebbolzen, wo dieser noch aus dem Gehäuse ragt. Wenn der Siebbolzen zunehmend in seiner Arbeitsstellung verfahren wird, werden auch diese Markierungen zunehmend verdeckt, beispielsweise vom Gehäuse selbst. Diese Markierungen geben jeweils das Überdeckungsmaß wieder, um welches die eine oder die mehreren vorgesehenen Entlüftungsnuten mit dem gehäuseseitigen Abschnitt der Entlüftungsleitung in Überdeckung stehen bzw. um welches Maß die Vorflut-Nut mit dem Förderkanal in Überdeckung steht. Auf diese Weise kann sehr feinfühlig, gegebenenfalls an unterschiedliche durch den Förderkanal strömende Kunststoffmaterialien angepasst, die Handhabung des Siebbolzens bei der Entlüftung ermöglicht werden, wobei es möglich ist, die Markierungen automatisch abzutasten und den Vorschub des Siebbolzens automatisch zu steuern, so dass in Abhängigkeit von bestimmten verarbeiteten Materialien oder bestimmten herzustellenden Produkten die Bewegung des Siebbolzens optimiert werden kann.

Vorteilhaft sind die erwähnten Markierungen nicht als Farbauftrag auf dem Siebbolzen vorgesehen, so dass einem Verschleiß durch Abrieb vorgebeugt ist. Vielmehr können die Markierungen vorteilhaft als Gravur in der Oberfläche des Siebbolzens ausgestaltet sein, beispielsweise als mechanisch zu ertastende, vergleichsweise tief in den Siebbolzen reichende Gravur, oder als lediglich farblich unterschiedliche vergleichsweise flache Gravur, beispielsweise in Art einer Lasergravur.

Vorteilhaft kann vorgesehen sein, dass die Entlüftungsleitung mehrfach abgewinkelt verläuft. Durch die Strömungsumlenkung wird die Geschwindigkeit der Strömung verringert, so dass zusätzlich zu den ohnehin vorgeschlagenen Maßnahmen ein "Herausschießen" der Schmelze aus der Mündung der Entlüftungsleitung verhindert wird und auch ohne kostenträchtige und Bauraum beanspruchende Schutzmaßnahmen wie z. B. die eingangs erwähnte Schutzhaube ein Schutz für das an der Filtrationseinrichtung arbeitende Personal bewirkt wird.

Der Austritt der Schmelze aus der Mündung, die sich am Gehäuse befindet, kann vorteilhaft vom Gehäuse abgeleitet werden, um Verschmutzungen des Gehäuses zu vermeiden oder auch um Gefahren für das Bedienungspersonal zu vermeiden. Hierzu kann vorteilhaft eine Verlängerungsleitung vorgesehen sein, beispielsweise in Form einer hitzebeständigen Schlauch- oder Rohrleitung. Wenn diese Verlängerungsleitung mit dem Gehäuse verschraubt ist, kann sie problemlos zu Wartungs- oder Reinigungszwecken oder um ausgetauscht zu werden, demontiert und gewartet bzw. ausgewechselt werden. Sie kann beispielsweise zu einem Auffangbehälter für Schmelze führen, der beispielsweise als geschlossener Kanister ausgestaltet sein kann, so dass aufwendige Schutzhauben nicht erforderlich sind, um das Personal im Bereich der Mündung des Entlüftungskanals vor austretender Schmelze zu schützen.

Vorteilhaft kann die Verlängerungsleitung abgewinkelt verlaufen, beispielsweise gebogen oder scharfkantig geknickt, so dass beispielsweise bei einer horizontal aus dem Gehäuse weisenden Mündung eine Umlenkung der austretenden Schmelze bewirkt wird. So kann beispielsweise eine Auffangwanne unter dem Gehäuse bzw. unter der Verlängerungsleitung vorgesehen sein, welche die austretende Schmelze aufnimmt, so dass auch in diesem Fall mit einfachsten Mitteln das Bedienungspersonal zuverlässig vor der aus dem Gehäuse austretenden Schmelze geschützt ist.

Vorteilhaft kann vorgesehen sein, dass die Schmelze mit möglichst geringer Geschwindigkeit aus der Filtrationseinrichturig ins Freie austritt. Daher kann vorteilhaft der Abschnitt, in welchem die Entlüftungsleitung einen vergrößerten Querschnitt aufweist, derjenige Abschnitt sein, der ins Freie mündet.

Weiterhin kann vorteilhaft vorgesehen sein, dass die Entlüftungsleitung von ihrer Mündung aus einen sich ins Innere verringernden Querschnitt aufweist. Es kann sich dabei entweder um die Mündung der Entlüftungsleitung handeln, wo diese Entlüftungsleitung ins Freie mündet. Es können jedoch auch andere Mündungen derartig ausgestaltet sein, beispielsweise Mündungen, wo ein Abschnitt der Entlüftungsleitung als Bohrung ausgestaltet ist und in die Oberfläche des Siebbolzens oder des Gehäuses mündet. In sämtlichen Fällen ist durch die sich stetig verringernde Querschnittsgeometrie eine Ausgestaltung der Entlüftungsleitung bewirkt, die es ermöglicht, erkaltete Kunststoffmasse mit möglichst einfachen Mitteln aus dem betreffenden Bauteil der Filtrationseinrichung zu entfernen. So kann beispielsweise in die erkaltete Kunststoffmasse ein Haken mittels eines Schraubgewindes eingedreht werden und anschließend kann der erkaltete Kunststoffpropfen gezogen werden. Dadurch, dass sich der Querschnitt von der Mündung aus stetig in das Innere des betreffenden Bauteils verringert, wird die möglichst problemlose Entnahme dieses Stopfens und somit eine möglichst schnelle Durchführung von Wartungsarbeiten ermöglicht.

Ausführungsbeispiele der Erfindung werden nachfolgend anhand der rein schematischen Darstellungen näher erläutert. Dabei zeigt
- Fig. 1: bei einem ersten Ausführungsbeispiel einen Blick von oben auf das Gehäuse einer Filtrationseinrichtung mit einem darin verschiebbaren Siebbolzen,

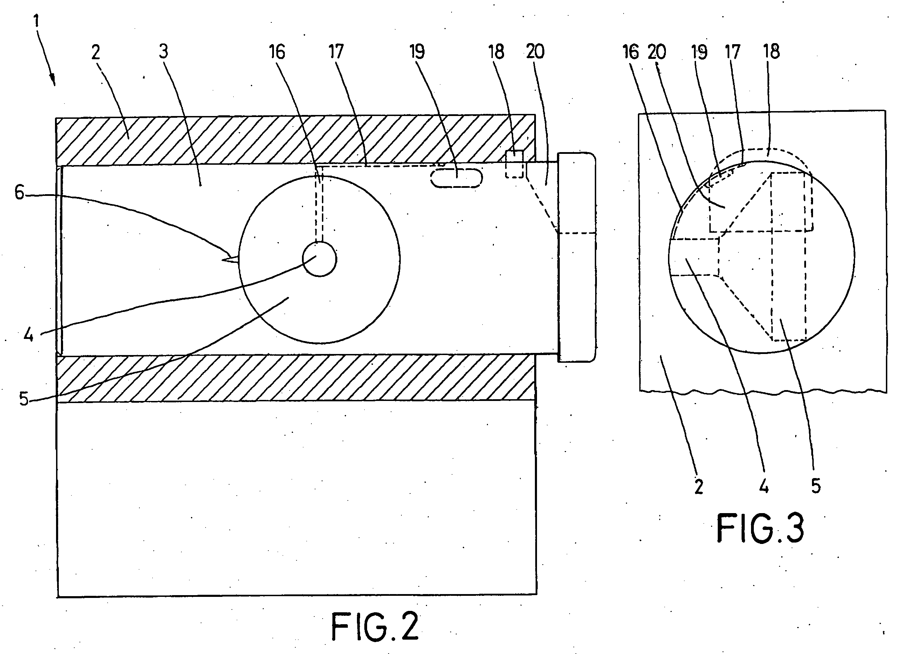

- Fig. 2: bei einem zweiten Ausführungsbeispiel einen Blick von der Vorder- oder Rückseite auf das Gehäuse einer Filtrationseinrichtung mit einem darin verschiebbaren Siebbolzen, und
- Fig. 3: bei dem Ausführungsbeispiel der Fig. 2 einen Blick in Längsrichtung des Siebbolzens.

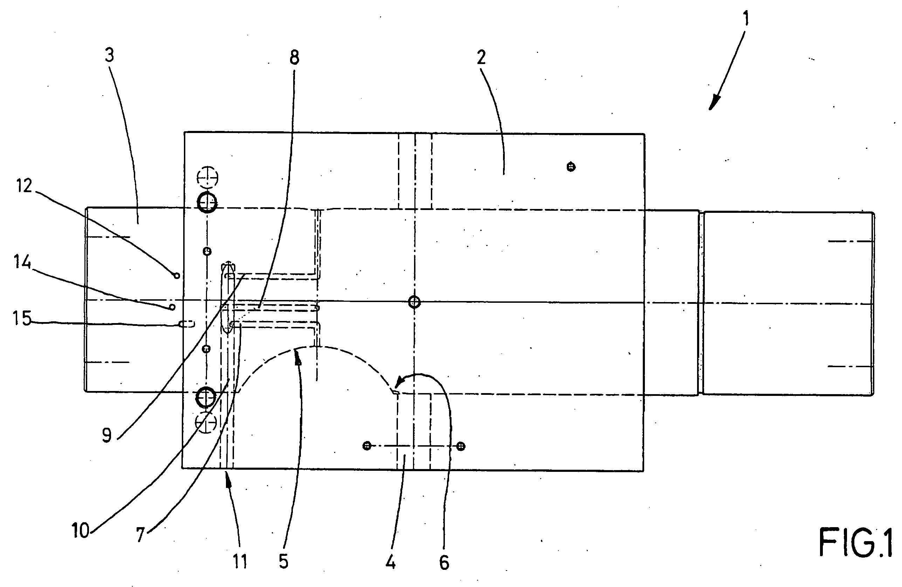

In Fig. 1 ist stark vereinfacht eine Filtrationseinrichtung 1 dargestellt, die ein Gehäuse 2 aufweist, durch welches sich ein Siebbolzen 3 erstreckt. Aus der Ansicht von oben ist deutlich erkennbar, dass quer zum Siebbolzen 3 ein Förderkanal 4 durch das Gehäuse 2 verläuft, wobei der Förderkanal 4 zur Führung von geschmolzenem Kunststoff dient. Der Siebbolzen 3 quert den Förderkanal 4.

Die dargestellte Filtrationseinrichtung 1 weist außer dem aus der Zeichnung ersichtlichen Siebbolzen 3 einen zweiten Siebbolzen 3 auf, der beispielsweise oberhalb oder unterhalb des dargestellten Siebbolzens 3 verläuft. Diesem zweiten Siebbolzen 3 ist ein zweiter Förderkanal 4 zugeordnet, der sich dementsprechend unterhalb des dargestellten Förderkanals 4 befindet. So kann durch Umschalten zwischen diesen beiden Siebbolzen 3 stets ein Strom flüssigen Kunststoffs durch die Filtrationseinrichtung 1 strömen, nämlich durch jeweils einen der beiden Förderkanäle 4, so dass stromabwärts von der Filtrationseinrichtung 1 eine kontinuierliche Weiterverarbeitung des Kunststoffs möglich ist.

Der Siebbolzen 3 weist eine Siebkammer 5 mit rundem Querschnitt auf, in der ein aus der Zeichnung nicht ersichtliches Sieb zur Filtration des Kunststoffs angeordnet ist, und deren aus der Zeichnung ersichtliche gebogene Durchdringungslinie sich aus der kreisrunden Querschnittsform des Siebbolzens 3 ergibt.

Die aus Fig. 1 ersichtliche Stellung des Siebbolzens 3 stellt beispielsweise - bei einer angenommenen Bewegungsrichtung des Siebbolzens 3 von links nach rechts - den Übergang zwischen einer Wartungsstellung des Siebbolzens 3 und der Arbeitsstellung des Siebbolzens 3 dar: Zunächst war der Siebbolzen 3 ganz nach links verfahren, weit aus dem Gehäuse 2 ragend, so dass sich die Siebkammer 5 vollständig außerhalb des Gehäuses 2 befindet und das in der Siebkammer 5 angeordnete Sieb zu Wartungszwecken zugänglich ist. In dieser Wartungsstellung ist der Förderkanal 4 durch den Siebbolzen 3 versperrt und der Kunststoff strömt durch den erwähnten zweiten Förderkanal 4 zur nachfolgenden, Kunststoff verarbeitenden Einrichtung.

Im Anschluss an die Wartung des Siebes wird der Siebbolzen 3 nach rechts verfahren bis in die aus der Zeichnung ersichtliche Übergangsstellung, bevor er seine Arbeitsstellung einnimmt. In der Arbeitsstellung befindet sich der Förderkanal 4 mit seinem vollen Querschnitt vor der Siebkammer 5.

In der dargestellten Übergangsstellung hingegen, die als Entlüftungsstellung bezeichnet ist, gelangt durch eine Vorflut-Nut 6 eine geringfügige Menge von Kunststoff aus dem Förderkanal 4 in die Siebkammer 5. Wenn der Siebbolzen 3 in der dargestellten Entlüftungsstellung verbleibt, kann die Siebkammer 5 langsam mit Kunststoff gefüllt werden. Aufgrund der relativ klein bemessenen Vorflut-Nut 6 wird nur sehr wenig Kunststoff aus dem Förderkanal 4 entnommen. Somit wird der durch den zweiten, nicht dargestellten Förderkanal strömende Kunststoff-Volumenstrom kaum reduziert und insbesondere ergibt sich keine nachteilige Auswirkung auf das nachfolgend hergestellte Kunststoffprodukt, beispielsweise keine Unterbrechung im Kunststoff, die zu einer fehlerhaften Produktqualität führen könnte.

In der Entlüftungsstellung von Fig. 1 wird aufgrund des durch die Vorfluten-Nut 6 einströmenden Kunststoffs Luft aus der Siebkammer 5 verdrängt. Diese gelangt durch drei Nuten 7, 8 und 9, die in der Oberfläche des Siebbolzens 3 vorgesehen sind, bis zu einer Entlüftungsbohrung 10, die durch das Gehäuse 2 verläuft und an einer Gehäuseseite mündet, die von der Stirnseite des Gehäuses 2 abgewandt ist, durch welche der Siebbolzen 3 aus dem Gehäuse 2 austritt.

Wenn am Ende des Entlüftungsvorgangs die Luft vollständig aus der Siebkammer 5 entwichen ist und flüssiger Kunststoff nachströmt, gelangt dieser durch die Entlüftungsbohrung 10 bis zu deren Mündung 11 und gelangt dort aus dem Gehäuse 2 ins Freie, ohne den Bereich des Gehäuses 2 um den Siebbolzen 3 herum, insbesondere auf der Stirnwand des Gehäuses 2, verschmutzen zu können, so dass eine optimal leichtgängige Bewegung des Siebbolzens 3 dadurch unterstützt wird, dass Verschmutzungen der Gehäuseoberfläche im Bereich des Siebbolzens 3 ausgeschlossen sind.

Die drei Nuten 7, 8 und 9 sind unterschiedlich lang bemessen und enden an axial unterschiedlichen Stellen des Siebbolzens 3. Wie aus der Zeichnung ersichtlich ist, wird die Entlüftungsfunktion der unteren kürzesten Nut 7 am ehesten beendet, wenn der Bolzen 3 weiter nach rechts verfahren wird. Anschließend wird als nächstes die obere, mittellange Nut 9 von der Entlüftungsbohrung 10 getrennt, so dass als Letztes die Entlüftung der Siebkammer 5 über die mittlere, längste Nut 8 und die Entlüftungsbohrung 10 erfolgt. Wenn die beiden ersten Nuten 7 und 9 von der Entlüftungsbohrung 10 durch eine entsprechend weit nach rechts verschobene Stellung des Siebbolzens 3 getrennt sind, ist auch bereits eine Überdeckung der Siebkammer 5 mit dem Förderkanal 4 geschaffen. Um zu vermeiden, dass ein unerwünscht großes Volumen des Kunststoffstroms aus dem Förderkanal 4 in die Siebkammer 5 gelangt und damit dem zur Produktion genutzten Kunststoffstrom, der durch den zweiten, nicht dargestellten Förderkanal fließt, entnommen wird, kann vorteilhaft der Siebbolzen 3 möglichst lange in einer Stellung verbleiben, in der beispielsweise der Kunststoff nur durch die Vorflut-Nut 6 in die Siebkammer 5 einströmt oder in welcher die Siebkammer 5 nur ein sehr geringes Maß an Überdeckung mit dem Förderkanal 4 aufweist.

Um diese Vorgänge präzise steuern zu können, sind auf dem Siebbolzen 3 Markierungen 12, 14 und 15 angebracht, die außerhalb des Gehäuses 2 sichtbar sind und die Stellung der Nuten 7, 8 und 9 im Verhältnis zur Entlüftungsbohrung 10 widerspiegeln. Die Markierung 15 ist nur noch so weit außerhalb des Gehäuses 2 zu erkennen, wie dies dem Überdeckungsgrad der unteren Nut 7 mit der Entlüftungsbohrung 10 entspricht. Als nächstes wird die obere Markierung 12 vom Gehäuse verdeckt werden, und zwar in demselben Maße, wie die Überdeckung zwischen der oberen Nut 9 und der Entlüftungsbohrung 10 reduziert wird. Am weitesten links ist die mittlere Markierung 14 angebracht, entsprechend der größten axialen Länge der Nut 8, so dass auch diese Markierung 14 dann vom Gehäuse 2 verdeckt wird, wenn der Siebbolzen 4 so weit in das Gehäuse 2 eingefahren ist, dass die Überdeckung zwischen der mittleren Nut 8 und der Entlüftungsbohrung 10 beendet ist.

Die untere Markierung 15 ist zudem als in axialer Richtung des Siebbolzens 3 längliche Markierung ausgestaltet und gibt das Maß der Überdeckung zwischen der Vorflut-Nut 6 und dem Förderkanal 4 an. Da die Vorflut-Nut 6, wie aus der Zeichnung ersichtlich, keilförmig ausgestaltet ist und somit in Bewegungsrichtung des Siebbolzens 3 einen zunehmend größeren freien Strömungsquerschnitt zur Verfügung stellt, kann durch die exakte Positionierung des Siebbolzens 3 die Befüllung der Siebkammer 5 mit Kunststoff aus dem Förderkanal 4 präzise gesteuert werden, indem der Siebbolzen 3 an der gewünschten Stelle verbleibt, in welcher die Vorflut-Nut 6 den gewünschten freien Strömungsquerschnitt aufweist.

Aus der Zeichnung nicht ersichtlich ist eine Verlängerungsleitung, die an die Mündung 11 anschließend vorgesehen sein kann, so dass der flüssige Kunststoff von der Oberfläche des Gehäuses 2 weggeleitet wird, ohne einerseits zum Bedienungspersonal spritzen und dieses gefährden zu können, und ohne die Oberfläche des Gehäuses 2 zu verschmutzen.

Gegebenenfalls kann einer derartigen Verlängerungsleitung eine preisgünstige, kleine, abgewinkelte Haube vor der Mündung 11 der Entlüftungsbohrung 10 vorgesehen sein, die einfach als Spritzschutz vorgesehen ist, so dass möglicherweise unter hohem Druck aus der Mündung 11 austretender flüssiger Kunststoff nicht weit ins Freie spritzen kann, sondern durch diese abgewinkelte nach unten offene Schutzhaube umgelenkt wird und beispielsweise in eine Auffangwanne gerät, die unter das Gehäuse 2 und insbesondere unter die Mündung 11 und die dort vorgesehene Schutzhaube gestellt ist. Auch eine gegebenenfalls vorgesehene Verlängerungsleitung kann dementsprechend abgewinkelt verlaufen, also beispielsweise bei einer horizontal durch das Gehäuse 2 verlaufenden Entlüftungsbohrung 2 den aus der Mündung 11 austretenden Kunststoffstrom nach unten umlenken, um das Bedienungspersonal zu schützen.

Statt einer oben offenen Auffangwanne kann vorteilhaft ein nach oben möglichst abgeschlossenes Auffanggefäß vorgesehen sein, so dass unkontrollierte Spritzer des flüssigen Kunststoffs zuverlässig ausgeschlossen sind.

## Patentansprüche

1. Filtrationseinrichtung (1) einer fließfähigen Kunststoff verarbeitenden Anlage, mit
• einem Gehäuse (2),
• einem durch das Gehäuse (2) verlaufenden, den fließfähigen Kunststoff führenden Förderkanal (4),
• einem in das Gehäuse (2) ragenden und den Förderkanal (4) querenden, als Siebbolzen (3) bezeichneten Siebträger,
• wenigstens einem im Siebbolzen (3) angeordneten Sieb,
• wobei der Siebbolzen (3) axial verschiebbar ist,
derart, dass in einer ersten Arbeitsstellung des Siebbolzens (3) das Sieb in dem Förderkanal angeordnet ist
und in einer zweiten Wartungsstellung des Siebbolzens (3) das Sieb für Wartungsarbeiten zugänglich außerhalb des Förderkanals (4) angeordnet ist,
und in einer dritten Entlüftungsstellung des Siebbolzens (3) mittels einer Nut (7, 8, 9), die in der Oberfläche des Siebbolzens verläuft, eine Entlüftungsleitung geschaffen ist, welche vom Sieb bis zu einer ins Freie mündenden Mündung (11) verfäuft,
**dadurch gekennzeichnet,**
**dass** ein als gehäuseseitiger Abschnitt bezeichneter Teil der Entlüftungsleitung durch das Gehäuse (2) verläuft,
wobei der gehäuseseitige Abschnitt derart verläuft, dass die Nut (7, 8, 9) an den gehäuseseitigen Abschnitt anschließt, wenn sich der Siebbolzen (3) in seiner Entlüftungsstellung befindet,
und die Nut (7, 8, 9) von dem gehäuseseitigen Abschnitt getrennt ist, wenn sich der Siebbolzen (3) in seiner Arbeitsstellung befindet.

2. Filtrationseinrichtung nach dem Oberbegriff des Anspruchs 1,
**dadurch gekennzeichnet,**
**dass** die Entlüftungsleitung einen Abschnitt aufweist, in welchem der Querschnitt der Entlüftungsleitung vergrößert ist, derart, dass die Fließgeschwindigkeit von durch die Entlüftungsleitung strömender Kunststoffschmelze reduziert ist.

3. Filtrationseinrichtung nach Anspruch 1 oder 2, **dadurch gekennzeichnet, dass** ein als gehäuseseitiger Abschnitt bezeichneter, durch das Gehäuse (2) verlaufender Teil der Entlüftungsleitung als Entlüftungsbohrung (10) ausgestaltet ist.

4. Filtrationseinrichtung nach Anspruch 3, **dadurch gekennzeichnet, dass** die Entlüftungsbohrung (10) in einer Oberfläche des Gehäuses (2) mündet, welche keine beweglichen Bauteile aufweist.

5. Filtrationseinrichtung nach Anspruch 3, **dadurch gekennzeichnet, dass** die Entlüftungsbohrung (10) in einer Oberfläche des Gehäuses (2) unterhalb eines beweglichen Bauteils oder im Abstand neben dem beweglichen Bauteil mündet.

6. Filtrationseinrichtung nach Anspruch 1, **dadurch gekennzeichnet, dass** wenigstens zwei Nuten (7, 8, 9) in der Oberfläche des Siebbolzens (3) verlaufen, wobei sich die Nuten (7, 8, 9) bezüglich des gehäuseseitigen Abschnitts unterschiedlich weit erstrecken, derart, dass bei unterschiedlichen Entlüftungsstellungen des Siebbolzens (3) wahlweise eine oder mehrere Nuten (7, 8, 9) in Verbindung mit dem gehäuseseitigen Abschnitt stehen.

7. Filtrationseinrichtung nach Anspruch 6, **dadurch gekennzeichnet, dass** die Nuten (7, 8, 9) zu unterschiedlichen Stellen einer das Sieb im Siebbolzen (3) aufnehmenden Siebkammer (5) verlaufen.

8. Filtrationseinrichtung nach einem der vorhergehenden Ansprüche, **dadurch gekennzeichnet,**
**dass** von der Nut (7, 8, 9) beabstandet in der Oberfläche des Siebbolzens (3) eine der Nut (7, 8, 9) zugeordnete Markierung (12, 14, 15) vorgesehen ist, die verdeckt ist, wenn sich der Siebbolzen (3) in seiner Arbeitsstellung befindet, und die das Überdeckungsmaß wiedergibt, um welches die zugehörige Nut in Überdeckung mit dem gehäuseseitigen Abschnitt steht.

9. Filtrationseinrichtung nach einem der vorhergehenden Ansprüche, **dadurch gekennzeichnet, dass** in der Oberfläche des Siebbolzens (3) eine Vorflut-Nut (6) vorgesehen ist, die, wenn der Siebbolzen (3) von seiner Wartungs- in seine Arbeitsstellung bewegt wird, eine Verbindung von einer das Sieb aufnehmenden Siebkammer (5) zum Förderkanal (4) schafft, bevor die Siebkammer (5) in Überdeckung mit dem Förderkanal (4) steht,
und dass von der Vorflut-Nut (6) beabstandet in der Oberfläche des Siebbolzens (3) eine der Vorflut-Nut (6) zugeordnete Markierung (15) vorgesehen ist, die vom Gehäuse (2) verdeckt ist, wenn sich der Siebbolzen (3) in seiner Arbeitsstellung befindet, und die das Überdeckungsmaß wiedergibt, um welches die Vorflut-Nut (6) in Überdeckung mit dem Förderkanal (4) steht.

10. Filtrationseinrichtung nach einem der Ansprüche 8 oder 9, **dadurch gekennzeichnet, dass** die Markierung (12, 14, 15) als Gravur in der Oberfläche des Siebbolzens (3) ausgestaltet ist.

11. Filtrationseinrichtung nach einem der vorhergehenden Ansprüche, **dadurch gekennzeichnet, dass** die Entlüftungsleitung mehrfach abgewinkelt verläuft.

12. Filtrationseinrichtung nach einem der vorhergehenden Ansprüche, **dadurch gekennzeichnet, dass** am Gehäuse (2) eine an die Mündung (11) des Entlüftungskanals anschließende Verlängerungsleitung vorgesehen ist.

13. Filtrationseinrichtung nach Anspruch 12, **dadurch gekennzeichnet, dass** die Verlängerungsleitung abgewinkelt verläuft.

14. Filtrationseinrichtung nach Anspruch 2, **dadurch gekennzeichnet, dass** die Entlüftungsleitung mit dem Abschnitt, welche den vergrößerten Querschnitt aufweist, ins Freie mündet.

15. Filtrationseinrichtung nach einem der vorhergehenden Ansprüche, **dadurch gekennzeichnet, dass** die Entlüftungsleitung einen in der Oberfläche des Gehäuses (2) oder des Siebbolzens (3) mündenden Abschnitt aufweiset, dessen Querschnitt sich, von der Mündung dieses Abschnitts ausgehend, stetig verringert.

## Claims

1. Filtration means (1) for a system for processing liquefiable plastic, which filtration means has
• a housing (2),
• a delivery duct (4) for conducting the liquefiable plastic and running through the housing (2),
• a sieve holder described as a screen plunger (3) projecting into the housing (2) and crossing the delivery duct (4),
• one or more screens disposed in the screen plunger (3),
• where the screen plunger (3) can be displaced axially so that when the screen plunger (3) is in a first, working position the screen is positioned in the delivery duct and when the screen plunger (3) is in a second, maintenance position the screen is positioned outside the delivery duct (4) so as to be accessible for maintenance work and when the screen plunger (3) is in a third, venting position a venting line is made by a groove (7, 8, 9,) running along the surface of the screen plunger (3) and running from the screen to an outlet (11) into the open air,
**characterised in that** a portion described as a housing-side portion of the venting line runs through the housing (2), where the housing-side portion runs so that the groove (7, 8, 9) connects to the housing-side portion when the screen plunger (3) is in its venting position and the groove (7, 8, 9) is disconnected from the housing-side portion when the screen plunger (3) is in its working position.

2. Filtration means in accordance with the preamble of claim 1,
**characterised in that** the venting line incorporates a portion in which the cross-section of the venting line is enlarged so that the flow rate of the plastic melt flowing through the venting line is reduced.

3. Filtration means in accordance with claim 1 or 2,
**characterised in that** a portion described as a housing-side portion of the venting line and running through the housing (2) is constructed as a venting hole (10).

4. Filtration means in accordance with claim 3,
**characterised in that** the venting hole (10) ends at a surface of the housing (2) which surface incorporates no moveable component parts.

5. Filtration means in accordance with claim 3, **characterised in that** the venting hole (10) ends at a surface of the housing (2) underneath a moveable component part or at a distance from and beside the moveable component part.

6. Filtration means in accordance with claim 1, **characterised in that** two or more grooves (7, 8, 9) run along the surface of the screen plunger (3), where the grooves (7, 8, 9) extend for different distances relative to the housing-side portion so that when the screen plunger (3) is in different venting positions one or more grooves (7, 8, 9) are connected to the housing-side portion.

7. Filtration means in accordance with claim 6, **characterised in that** the grooves (7, 8, 9) run to different points of a screen chamber (5) which receives the screen in the screen plunger (3).

8. Filtration means in accordance with any one of the foregoing claims, **characterised in that** a mark (12, 14, 15) assigned to the groove (7, 8, 9) is provided in the surface of the screen plunger (3) at a distance from the groove (7, 8, 9) and is covered when the screen plunger (3) is in its working position and indicates the amount of overlap when the associated groove overlaps the housing-side portion.

9. Filtration means in accordance with any one of the foregoing claims, **characterised in that** provided in the surface of the screen plunger (3) is a drainage groove (6) that, when the screen plunger (3) is moved from its maintenance to its working position, sets up a connection between a screen chamber (5) receiving the screen and the delivery duct (4) before the screen chamber (5) is aligned with the delivery duct (4),
and that provided in the surface of the screen plunger (3) at a distance from the drainage groove (6) and assigned to the drainage groove (6) is a mark (15), which is covered by the housing (2) when the screen plunger (3) is in its working position and which indicates the degree of alignment between the drainage groove (6) and the delivery duct (4).

10. Filtration means in accordance with claim 8 or 9, **characterised in that** the mark (12, 14, 15) is engraved in the surface of the screen plunger (3).

11. Filtration means in accordance with any one of the foregoing claims, **characterised in that** the venting line is constructed with a number of sharp bends in it.

12. Filtration means in accordance with any one of the foregoing claims, **characterised in that** an extension line connecting to the outlet (11) of the venting duct is provided on the housing (2).

13. Filtration means in accordance with claim 12, **characterised in that** the extension line has a bend or bends in it.

14. Filtration means in accordance with claim 2, **characterised in that** the venting line with the portion which incorporates the enlarged cross-section runs out into the open air.

15. Filtration means in accordance with any one of the foregoing claims, **characterised in that** the venting line incorporates a portion ending at the surface of the housing (2) or of the screen plunger (3) the cross-section of which portion, starting from the outlet of this portion, continuously decreases.

## Revendications

1. Dispositif de filtration (1) d'une installation transformant de la matière plastique fluide, comprenant
• un carter (2),
• un conduit de refoulement (4) traversant le carter (2) et guidant la matière plastique fluide,
• un support de tamis appelé goujon tamis (3), faisant saillie dans le carter (2) et traversant le conduit de refoulement (4),
• au moins un tamis disposé dans le goujon tamis (3),
• sachant que le goujon tamis (3) est déplaçable axialement, de sorte que dans une première position - de travail - du goujon tamis (3), le tamis est disposé dans le conduit de refoulement et que dans une deuxième position - de maintenance - du goujon tamis (3), le tamis est disposé accessible hors du conduit de refoulement (4), et que dans une troisième position - de dégazage - du goujon tamis (3) au moyen d'une gorge (7, 8, 9) dont le tracé se situe à la surface du goujon tamis, une conduite de dégazage est créée, qui va du tamis jusqu'à un orifice (11) débouchant en plein air,
**caractérisé en ce qu'**une partie de la conduite de dégazage appelée segment côté carter traverse le carter (2), sachant que le segment côté carter présente un tracé tel que la gorge (7, 8, 9) se raccorde au segment côté carter lorsque le goujon tamis (3) se trouve sur sa position de dégazage, et que la gorge (7, 8, 9) est séparée du segment côté carter lorsque le goujon tamis (3) se trouve dans sa position de travail.

2. Dispositif de filtration selon l'énoncé générique de la revendication 1,
**caractérisé en ce que** la conduite de dégazage présente un segment dans lequel la section de la conduite de dégazage est agrandie de sorte que la vitesse d'écoulement du plastique fondu circulant par la conduite de dégazage est réduite.

3. Dispositif de filtration selon la revendication 1 ou 2,
**caractérisé en ce qu'**une partie de la conduite de dégazage, partie qui est désignée comme segment côté carter traversant le carter (2), est configurée sous forme d'alésage (10) de dégazage.

4. Dispositif de filtration selon la revendication 3,
**caractérisé en ce que** l'alésage (10) de dégazage aboutit dans une surface du carter (2) ne présentant aucune pièce mobile.

5. Dispositif de filtration selon la revendication 3, **caractérisé en ce que** l'alésage (10) de dégazage débouche dans une surface du carter (2) située en-dessous d'une pièce mobile ou à une certaine distance à côté de la pièce mobile.

6. Dispositif de filtration selon la revendication 1, **caractérisé en ce qu'**au moins deux gorges (7, 8, 9) circulent dans la surface du goujon tamis (3), sachant que les gorges s'étendent différemment loin par rapport au segment côté carter, de sorte que lorsque le goujon tamis (3) se trouve sur des positions de dégazage différentes, une ou plusieurs gorges au choix (7, 8, 9) se trouvent en liaison avec le segment côté carter.

7. Dispositif de filtration selon la revendication 6, **caractérisé en ce que** les gorges (7, 8, 9) circulent en différents endroits d'une chambre de tamisage (5) recevant le tamis dans le goujon tamis (3).

8. Dispositif de filtration selon l'une des revendications précédentes, **caractérisé en ce qu'**à une distance de la gorge (7, 8, 9) dans la surface du goujon tamis (3) est prévu un marquage (12, 14, 15) affecté à la gorge (7, 8, 9), marquage qui est masqué lorsque le goujon tamis (3) se trouve dans sa position de travail, et qui indique le quantum de masquage selon lequel la gorge afférente se trouve en superposition avec le segment côté carter.

9. Dispositif de filtration selon l'une des revendications précédentes, **caractérisé en ce que** dans la surface du goujon tamis (3) est prévue un gorge (6) de pré-afflux qui, lorsque le goujon tamis (3) est amené de sa position de maintenance sur sa position de travail, crée une jonction entre une chambre (5) recevant le tamis et le conduit de refoulement (4) avant que la chambre (5) de tamis se retrouve en superposition avec le conduit de refoulement (4),
et **en ce qu'**à distance de la gorge (6) de pré-afflux est prévu, dans la surface du goujon tamis (3), un marquage (15) affecté à la gorge de préafflux (6), marquage qui est masqué par le carter (2) lorsque le goujon tamis (3) se trouve dans sa position de travail, et qui renseigne sur le quantum de recouvrement selon lequel la gorge de pré-afflux (6) se trouve en superposition avec le conduite de refoulement (4).

10. Dispositif de filtration selon l'une des revendications 8 ou 9, **caractérisé en ce que** le marquage (12, 14, 15) est configuré comme gravure dans la surface du goujon tamis (3).

11. Dispositif de filtration selon l'une des revendications des précédentes, **caractérisé en ce que** la conduite de dégazage présente un tracé plusieurs fois coudé.

12. Dispositif de filtration selon l'une des revendications précédentes, **caractérisé en ce que** sur le carter (2) est prévu une conduite de prolongation se raccordant à l'orifice (11) du conduit de dégazage.

13. Dispositif de filtration selon la revendication 12, **caractérisé en ce que** la conduite de prolongation présente un tracé coudé.

14. Dispositif de filtration selon la revendication 2, **caractérisé en ce que** la conduite de dégazage débouche en plein air par le segment présentant la section agrandie.

15. Dispositif de filtration selon l'une des revendications précédentes, **caractérisé en ce que** la conduite de dégazage présente un segment débouchant dans la surface du carter (2) ou du goujon tamis (3), segment dont la section va en s'amenuisant constamment en partant de l'orifice de ce segment.
